(19) Europäisches Patentamt / European Patent Office / Office européen des brevets

(11) **EP 2 442 436 B1**

(12) **FASCICULE DE BREVET EUROPEEN**

(45) Date de publication et mention de la délivrance du brevet:
**24.10.2018 Bulletin 2018/43**

(51) Int Cl.:
*H02M 5/458* *(2006.01)*    *H02M 1/44* *(2007.01)*

(21) Numéro de dépôt: **11181530.4**

(22) Date de dépôt: **16.09.2011**

(54) **Procédé et système de commande pour réduire le courant de mode commun dans un convertisseur de puissance**

Verfahren und Steuersystem zur allgemeinen Reduzierung des Stroms in einem Leistungswandler

Control method and system for reducing the common-mode current in a power converter

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **04.10.2010 FR 1057995**

(43) Date de publication de la demande:
**18.04.2012 Bulletin 2012/16**

(73) Titulaire: **Schneider Toshiba Inverter Europe SAS**
**27120 Pacy sur Eure (FR)**

(72) Inventeurs:
• **Videt, Arnaud**
**59655 Villeneuve d'Ascq (FR)**
• **Loizelet, Philippe**
**27120 Le Plessis Hebert (FR)**
• **Thiam, Mohamet**
**95000 Cergy (FR)**

(74) Mandataire: **Dufresne, Thierry et al**
**Schneider Electric Industries SAS**
**Service Propriété Industrielle**
**35 rue Joseph Monier - CS 30323**
**92506 Rueil-Malmaison Cedex (FR)**

(56) Documents cités:
JP-A- 2003 018 853    US-B1- 6 185 115
US-B1- 7 738 267

• DE BROE, A.M.; JULIAN, A.L.; LIPO, T.A: "Neutral-to-ground voltage minimization in a PWM-rectifier/inverter configuration", POWER ELECTRONICS AND VARIABLE SPEED DRIVES 1996. SIXTH INTERNATIONAL CONFERENCE ON, 23 septembre 1996 (1996-09-23), - 25 septembre 2011 (2011-09-25), pages 564-568, XP002615871, DOI: 10.1049/cp:19960975

## Description

La présente invention se rapporte à un procédé et un système de commande pour réduire la tension et le courant de mode commun dans un convertisseur de puissance.

Un convertisseur de puissance comporte plusieurs phases d'entrée connectées au réseau, par exemple trois phases d'entrée s'il est connecté sur un réseau triphasé. Connecté à ses phases d'entrée, un convertisseur classique comporte un étage redresseur permettant de transformer la tension alternative fournie par le réseau en une tension continue. Le convertisseur comporte également un bus d'alimentation de puissance doté d'une première ligne d'alimentation à potentiel positif et d'une seconde ligne d'alimentation à potentiel négatif sur lesquelles est appliquée la tension continue et un condensateur de bus connecté entre la première ligne d'alimentation et la seconde ligne d'alimentation et destiné à maintenir constante la tension continue sur le bus. En aval du condensateur de bus, un convertisseur de puissance de type variateur de vitesse comporte également un étage onduleur doté de plusieurs bras de commutation, en règle générale trois bras de commutation, connectés chacun à une phase de sortie raccordée à une charge électrique. Chaque bras de commutation est connecté entre la première ligne d'alimentation et la seconde ligne d'alimentation du bus et comporte, par exemple dans le cas d'un convertisseur à deux niveaux, deux transistors de puissance commandés pour transformer la tension continue en une tension variable à destination de la charge électrique.

L'étage redresseur placé en entrée du convertisseur peut être de type actif en comportant également plusieurs bras de commutation dotés chacun par exemple d'au moins deux transistors de puissance. Ces transistors sont chacun commandés par un dispositif de commande de grille afin de pouvoir transformer la tension alternative du réseau en une tension continue appliquée sur le bus d'alimentation. En anglais, ce type de convertisseur avec un étage redresseur actif en entrée est communément appelé "Active front end".

De manière classique, les commandes des interrupteurs de puissance de l'étage redresseur et de l'étage onduleur sont réalisées par modulation de largeur d'impulsion (ci-après MLI). Une MLI de type intersective consiste à comparer une porteuse triangulaire symétrique ou asymétrique avec une ou plusieurs modulantes. Pour un transistor de puissance de l'étage onduleur ou de l'étage redresseur, les intersections entre une porteuse et une ou plusieurs modulantes définissent les instants de commutation à la fermeture et à l'ouverture du transistor.

Il est connu que l'augmentation de la fréquence de découpage appliquée à un étage onduleur entraîne une hausse du courant de mode commun, elle-même due à une augmentation de la densité des variations dv/dt de la tension de mode commun. Le courant de mode commun généré peut emprunter différents chemins entre un variateur de vitesse et une charge électrique. Ces chemins sont créés par des couplages capacitifs générés entre les conducteurs du câble reliant le variateur à la charge électrique, entre les enroulements du moteur et le stator ou entre les semi-conducteurs de puissance et le dissipateur relié à la terre... Lorsque le variateur de vitesse comporte un étage onduleur et un étage redresseur actif, la tension de mode commun totale du variateur de vitesse est la somme des perturbations fournies par l'étage redresseur et par l'étage onduleur.

Différentes solutions ont été développées pour réduire le courant de mode commun. Ces solutions peuvent consister en l'ajout d'un filtre passif ou en une action sur les commandes de l'étage redresseur et de l'étage onduleur.

Le document JP2003018853 propose par exemple une méthode pour réduire le courant de mode commun dans un variateur de vitesse en synchronisant la commutation à la fermeture (ou à l'ouverture) de trois interrupteurs de puissance (hauts ou bas) de l'étage redresseur avec la commutation à la fermeture (ou à l'ouverture) des trois interrupteurs correspondants (respectivement hauts ou bas) de l'étage onduleur. Cette solution permet de réduire la dimension du filtre employé pour filtrer le courant de mode commun et donc de diminuer les coûts du convertisseur. Cependant, elle ne permet pas de réduire suffisamment le courant de mode commun dans le variateur de vitesse.

Le brevet US 6,185,115 décrit également une méthode permettant de synchroniser les commutations de l'étage redresseur avec les commutations de l'étage onduleur de manière à réduire la tension de mode commun. De même que pour le document cité précédemment, cette méthode n'est pas satisfaisante car elle ne permet pas de réduire suffisamment la tension de mode commun dans le variateur de vitesse. En effet, la méthode proposée consiste à synchroniser la commutation d'un seul bras de commutation de l'étage onduleur, en front montant et descendant, avec la commutation d'un seul bras de commutation de l'étage redresseur ce qui permet, pour une période de découpage, de passer seulement de douze fronts de tension à huit fronts de tension sur tous les bras de commutation.

Le but de l'invention est de proposer un procédé de commande permettant de réduire de manière conséquente la tension et le courant de mode commun dans un convertisseur de puissance.

Ce but est atteint par un procédé de commande destiné à réduire le courant de mode commun dans un convertisseur de puissance qui comporte :

- un étage redresseur connecté à plusieurs phases d'entrée et un étage onduleur connecté à plusieurs phases de sortie,
- un bus continu d'alimentation reliant l'étage redresseur à l'étage onduleur et comportant une première ligne d'alimentation et une deuxième ligne d'alimentation sur chacune desquelles est appliqué un potentiel électrique,

- l'étage redresseur et l'étage onduleur comportant chacun au moins deux bras de commutation connectés à la première ligne d'alimentation et à la deuxième ligne d'alimentation,
- des premiers moyens de commande de l'étage redresseur pour connecter sélectivement pendant une durée de commutation chaque phase d'entrée à la première ligne d'alimentation ou à la deuxième ligne d'alimentation,
- des seconds moyens de commande de l'étage onduleur pour connecter sélectivement pendant une durée de commutation une phase de sortie à la première ligne d'alimentation ou à la deuxième ligne d'alimentation,
- sur chaque période de découpage, l'étage redresseur et l'étage onduleur étant commandés de manière synchronisée de telle sorte qu'une variation de potentiel appliquée sur une phase d'entrée corresponde toujours à une variation de potentiel de même signe appliquée sur une phase de sortie.

Selon une particularité, l'étage redresseur et l'étage onduleur sont commandés de manière synchronisée par action sur la modulation de largeur d'impulsion appliquée à l'étage redresseur et à l'étage onduleur.

Selon une autre particularité, l'étage redresseur et l'étage onduleur sont commandés de manière synchronisée en suivant des règles de détermination, chaque règle de détermination tenant compte de la durée de commutation de chaque bras de commutation de l'étage onduleur et de l'étage redresseur.

L'invention concerne également un système de commande destiné à réduire le courant de mode commun dans un convertisseur de puissance qui comporte :

- un étage redresseur connecté à plusieurs phases d'entrée et un étage onduleur connecté à plusieurs phases de sortie,
- un bus continu d'alimentation reliant l'étage redresseur à l'étage onduleur et comportant une première ligne d'alimentation et une deuxième ligne d'alimentation sur chacune desquelles est appliqué un potentiel électrique,
- l'étage redresseur et l'étage onduleur comportant chacun au moins deux bras de commutation connectés à la première ligne d'alimentation et à la deuxième ligne d'alimentation,
- des premiers moyens de commande de l'étage redresseur employant une modulation de largeur d'impulsion pour connecter sélectivement chaque phase d'entrée à la première ligne d'alimentation ou à la deuxième ligne d'alimentation,
- des seconds moyens de commande de l'étage onduleur employant une modulation de largeur d'impulsion pour connecter sélectivement une phase de sortie à la première ligne d'alimentation ou à la deuxième ligne d'alimentation,
- caractérisé en ce que les premiers moyens de commande de l'étage redresseur et les seconds moyens de commande de l'étage onduleur sont synchronisés de telle sorte qu'une variation de potentiel appliquée sur une phase d'entrée corresponde toujours à une variation de potentiel de même signe appliquée à une phase de sortie.

Selon une particularité, l'étage redresseur et l'étage onduleur comportent chacun trois bras de commutation à deux transistors de puissance sur chaque bras de commutation.

Selon une autre particularité, l'étage redresseur et l'étage onduleur sont configurés de manière à pouvoir générer un même nombre de niveaux de potentiels électriques.

Selon une autre particularité, l'étage onduleur est par exemple de type NPC.

D'autres caractéristiques et avantages vont apparaître dans la description détaillée qui suit en se référant à un mode de réalisation donné à titre d'exemple et représenté par les dessins annexés sur lesquels :

- la figure 1 représente un convertisseur de puissance de type variateur de vitesse doté d'un étage onduleur à deux niveaux et d'un redresseur actif,

- la figure 2 représente un convertisseur de puissance de type variateur de vitesse doté d'un étage onduleur de type NPC ("Neutral Point Clamped") à trois niveaux et d'un redresseur actif de type pont de Vienne à trois niveaux,

- la figure 3 illustre le principe de synchronisation entre la commande des bras de commutation de l'étage redresseur et la commande des bras de commutation de l'étage onduleur,

- la figure 4 représente, sous forme de diagramme fonctionnel, un exemple d'algorithme mis en oeuvre dans le procédé de commande de l'invention.

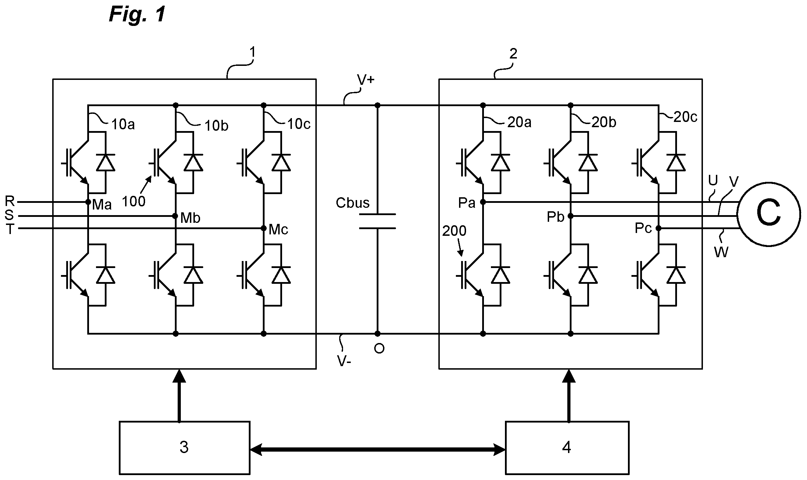

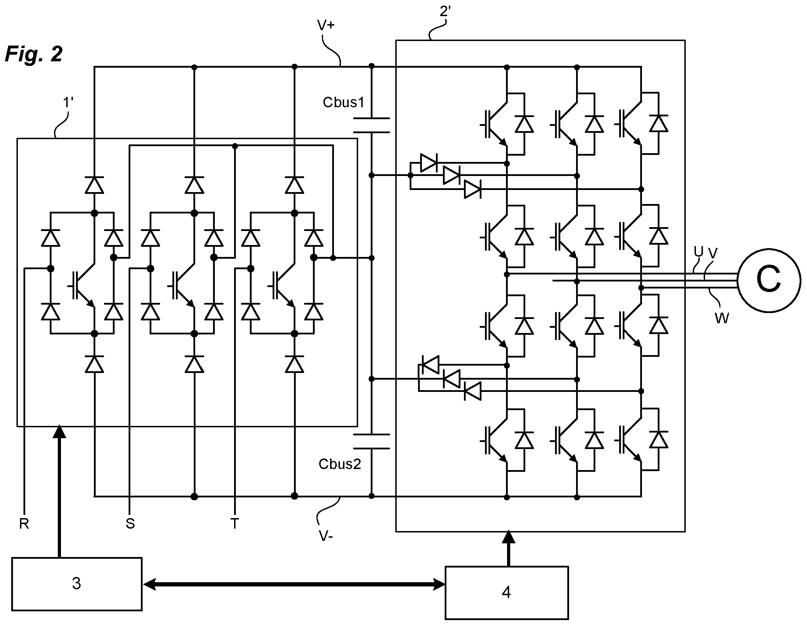

En référence aux figures 1 et 2, de manière connue, un convertisseur de puissance par exemple de type variateur de vitesse comporte un étage redresseur 1, 1', un bus continu d'alimentation et un étage onduleur 2, 2'. Différentes configurations de convertisseur de puissance sont possibles. La présente invention s'applique tout particulièrement aux convertisseurs de puissance comportant un étage redresseur actif.

La figure 1 représente par exemple un variateur de vitesse à deux niveaux doté d'un étage redresseur 1 actif. La figure 2 représente par exemple un variateur de vitesse à trois niveaux employant un étage onduleur 2' de type NPC ("Neutral Point Clamped") et un étage redresseur 1' actif de type pont de Vienne. D'autres configurations sont possibles comme l'emploi d'un étage onduleur à condensateur flottant ("flying capacitor").

En référence à la figure 1, l'étage redresseur 1 est connecté au réseau via des inductances AC (non représentées), par exemple sur trois phases d'entrée R, S, T pour un étage redresseur 1 triphasé. Habituellement, dans un variateur de vitesse, l'étage redresseur est composé d'un pont de diodes. Cependant, l'étage redresseur 1 peut aussi être de type actif en comportant un ou plusieurs bras de commutation 10a, 10b, 10c commandés identiques. L'étage redresseur 1 est ainsi commandé pour contrôler le courant prélevé sur le réseau et pour transformer la tension alternative fournie par le réseau en une tension continue appliquée sur le bus continu d'alimentation. Sur un réseau triphasé, l'étage redresseur 1 comporte trois bras de commutation 10a, 10b, 10c connectés chacun à l'une des trois phases d'entrée R, S, T du réseau triphasé à travers les inductances AC. Dans une configuration classique, chaque bras de commutation comporte par exemple deux transistors de puissance 100, par exemple de type IGBT ou JFET et un point milieu de connexion Ma, Mb, Mc situé entre les deux transistors et connecté à une phase d'entrée R, S, T. Le bus continu d'alimentation de puissance relie l'étage redresseur 1 à l'étage onduleur 2. Il comporte une ligne d'alimentation à potentiel positif V+ et une ligne d'alimentation à potentiel négatif V-. Au moins un condensateur de bus Cbus est connecté à chacune des deux lignes d'alimentation du bus et permet de maintenir la tension du bus à une valeur constante.

Sur la figure 1, l'étage onduleur 2 est connecté au bus continu d'alimentation, en aval du condensateur de bus Cbus. Il comporte plusieurs bras de commutation 20a, 20b, 20c identiques connectés chacun à une phase de sortie U, V, W reliée à la charge électrique C. Pour une charge électrique C fonctionnant en triphasé, l'étage onduleur 2 comporte ainsi trois bras de commutation 20a, 20b, 20c. Dans un étage onduleur 2 de configuration classique (figure 1), chaque bras de commutation 20a, 20b, 20c comporte deux transistors de puissance 200 et un point milieu de connexion Pa, Pb, Pc situé entre les deux transistors et connecté à la charge électrique.

Dans une configuration similaire à celle de la figure 1, le variateur de vitesse de la figure 2 comporte un étage redresseur 1' actif du type pont de Vienne à trois niveaux et un étage onduleur 2' de type NPC à trois niveaux. Le bus continu d'alimentation comporte alors plusieurs condensateurs de bus Cbus1, Cbus2 et une ou plusieurs lignes d'alimentation à potentiel intermédiaire. Cette topologie bien connue n'est pas décrite précisément dans la présente demande mais il faut comprendre que l'invention telle que décrite ci-dessous peut parfaitement s'y appliquer, ainsi qu'à d'autres topologies.

Le variateur comporte également des premiers moyens de commande 3 permettant de commander la commutation de chacun des bras de commutation de l'étage redresseur 1, 1' et des seconds moyens de commande 4 permettant de commander la commutation de chacun des bras de commutation de l'étage onduleur 2, 2'. Pour chaque commutation d'un transistor de puissance d'un bras de commutation, les premiers ou seconds moyens de commande 3, 4 utilisent une commande par Modulation de Largeur d'impulsion (MLI ou PWM en anglais) permettant de définir les instants de commutation de chaque transistor de l'étage redresseur 1, 1' et de l'étage onduleur 2, 2'. La commande par MLI classique est de type intersective et consiste à comparer une porteuse triangulaire symétrique ou asymétrique avec une ou plusieurs modulantes. Les intersections entre la porteuse et la ou les modulantes définissent les instants de commutation à la fermeture et à l'ouverture du transistor de puissance.

Selon l'invention, les premiers moyens de commande et les seconds moyens de commande peuvent être mutualisés et comporter un microprocesseur commun gérant à la fois la commande de l'étage redresseur 1, 1' et celle de l'étage onduleur 2, 2'.

Le procédé de commande de l'invention s'applique à un convertisseur qui comporte un même nombre de bras de commutation, par exemple trois bras de commutation, sur l'étage redresseur 1, 1' et l'étage onduleur 2, 2', chaque bras comportant au moins deux transistors de puissance. Préférentiellement, le nombre de niveaux de l'étage redresseur 1, 1' est identique au nombre de niveaux de l'étage onduleur 2, 2'. Sur la figure 1, l'étage redresseur 1 à deux niveaux est ainsi associé avec un étage onduleur 2 classique à deux niveaux. De même, sur la figure 2, l'étage redresseur 1' de type "Vienne" à trois niveaux est associé à un étage onduleur 2' de type NPC à trois niveaux.

Dans la suite de la description, nous nous intéresserons au cas du variateur de vitesse classique à deux niveaux tel que représenté en figure 1.

L'invention vise à réduire de manière conséquente le courant de mode commun dans un convertisseur de puissance, par exemple de type variateur de vitesse, qui comporte un étage redresseur 1 actif et un étage onduleur 2.

Cette structure de variateur présente en effet deux sources de tension de mode commun liées à la présence de commutations sur l'étage onduleur 2 et sur l'étage redresseur 1. En commutant, l'étage onduleur 2 génère une tension de mode commun dénommée Vmcinv et l'étage redresseur 1 génère une tension de mode commun Vmcrec définies par les relations suivantes :

$$Vmcinv = \frac{V_{U0} + V_{V0} + V_{W0}}{3}$$

$$Vmcrec = \frac{V_{R0} + V_{S0} + V_{T0}}{3}$$

Dans lesquelles :

-    $V_{U0}$, $V_{V0}$, $V_{W0}$ correspondent aux tensions simples sur les phases de sortie U, V, W de l'étage onduleur, référencées au point bas (O) du bus continu d'alimentation,

- $V_{R0}$, $V_{S0}$, $V_{T0}$ correspondent aux tensions simples de chaque bras de l'étage redresseur, référencées au point bas (O) du bus continu d'alimentation.

La tension de mode commun totale du variateur de vitesse est égale à la somme des perturbations fournies par l'étage redresseur 1 et par l'étage onduleur 2. Comme les tensions de mode commun générées par l'étage redresseur 1 et par l'étage onduleur 2 sont de signes opposés, on obtient la relation suivante exprimant la tension de mode commun totale générée sur le variateur de vitesse :

$$Vmc = \frac{V_{U0} + V_{V0} + V_{W0}}{3} - \frac{V_{R0} + V_{S0} + V_{T0}}{3}$$

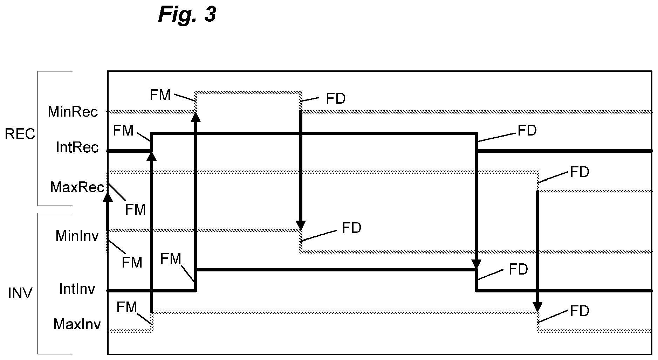

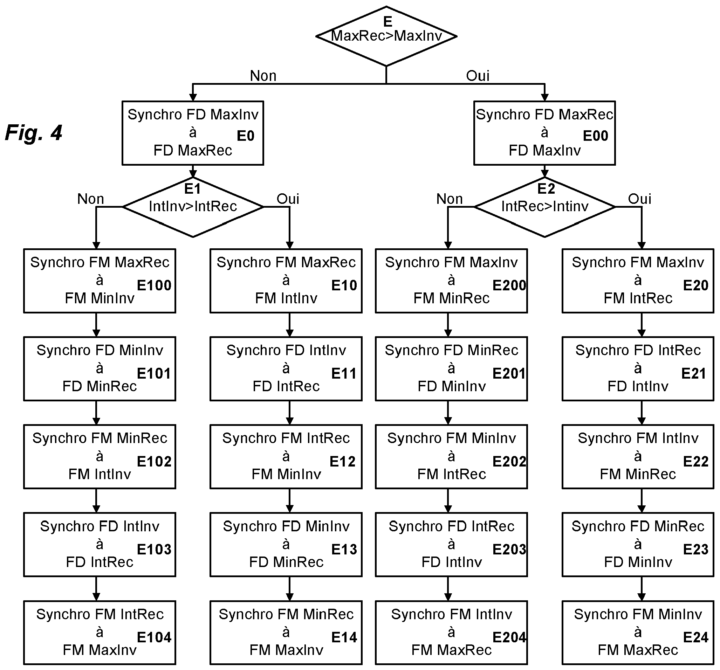

En considérant que l'étage redresseur 1 et l'étage onduleur 2 commutent à la même fréquence de découpage, un variateur de vitesse à redresseur actif génère donc deux fois plus de variations de la tension de mode commun qu'un variateur classique.
Le principe de l'invention est donc de compenser la tension de mode commun générée par l'étage onduleur 2 par la tension de mode commun générée par l'étage redresseur 1, ou inversement.
Pour cela, le procédé de commande de l'invention consiste à commander l'étage onduleur 2 et l'étage redresseur 1 de manière synchronisée (en temps) de telle sorte qu'une variation de potentiel (=front montant ou front descendant) appliquée sur une phase d'entrée R, S, T corresponde toujours à une variation de potentiel (=front montant ou front descendant) de même signe appliquée sur une phase de sortie U, V, W. Pour cela, il s'agit donc de synchroniser les premiers moyens de commande 3 dédiés à l'étage redresseur 1 avec les seconds moyens de commande 4 dédiés à l'étage onduleur 2.
Ainsi, théoriquement, il s'agit de réaliser des doubles commutations entre l'étage redresseur 1 et l'étage onduleur 2 de sorte que la génération d'un front de tension montant FM ou d'un front de tension descendant FD réalisée par la commutation d'un bras de commutation de l'étage redresseur 1 coïncide avec la génération d'un front de tension montant FM, respectivement descendant FD, réalisée par la commutation d'un bras de commutation de l'étage onduleur 2. Plus précisément, pour une impulsion sur un bras de commutation de l'étage onduleur 2, la génération du front de tension montant pour cette impulsion coïncide avec la génération d'un front de tension montant d'une impulsion générée par un bras de commutation de l'étage redresseur et la génération du front de tension descendant de cette impulsion coïncide avec la génération d'un front de tension descendant d'une autre impulsion qui est donc générée par un autre bras de commutation de l'étage redresseur. La synchronisation des deux fronts (montant et descendant) réalisée par un bras de commutation de l'étage onduleur s'effectue donc avec deux bras de commutation différents de l'étage redresseur. Bien entendu, le raisonnement est le même en partant d'une impulsion de l'étage redresseur 1. De cette manière, il est ainsi possible de réaliser une synchronisation totale de toutes les commutations en respectant des règles de sélection déterminées telles que celles décrites ci-dessous en liaison avec la figure 4.
Il en résulte alors que la tension de mode commun générée par une commutation d'un bras sur l'étage redresseur 1 et la tension de mode commun générée par une commutation d'un bras sur l'étage onduleur 2 se compensent.
Pour réaliser une synchronisation totale, les premiers et seconds moyens de commande 3, 4 sont configurés de manière à pouvoir déplacer dans le temps chaque impulsion de tension générée par les bras de commutation respectivement de l'étage redresseur 1 et de l'étage onduleur 2.
Un exemple de synchronisation totale entre l'étage onduleur (INV sur la figure 3) et l'étage redresseur (REC sur la figure 3) est représenté sur la figure 3. Sur cette figure 3, chaque front de tension montant FM généré par la commande d'un bras de commutation 10a, 10b, 10c de l'étage redresseur 1 est synchronisé en temps avec la génération d'un front de tension montant FM réalisée par la commande d'un bras de commutation 20a, 20b, 20c de l'étage onduleur 2. De même chaque front de tension descendant FD généré par la commande d'un bras de commutation 10a, 10b, 10c de l'étage redresseur 1 est synchronisé en temps avec la génération d'un front de tension descendant FD réalisée par la commande d'un bras de commutation 20a, 20b, 20c de l'étage onduleur 2.
Un exemple d'algorithme permettant de parvenir à une telle synchronisation totale est représenté en figure 4.
Cet algorithme comporte plusieurs étapes successives mises en oeuvre par les moyens de commande 3, 4.

❖ Une première étape E de comparaison consiste à déterminer si l'impulsion la plus longue MaxRec à appliquer sur l'étage redresseur 1 est plus longue que l'impulsion la plus longue MaxInv à appliquer sur l'étage onduleur 2.

❖ Si non :
➤ Le front de tension descendant FD de l'impulsion la plus longue MaxInv à appliquer sur l'étage onduleur 2 est synchronisé avec le front de tension descendant FD de l'impulsion la plus longue MaxRec à appliquer sur l'étage redresseur 1 (E0).

➢ Si l'impulsion de durée intermédiaire IntInv à appliquer sur l'étage onduleur 2 est plus longue que l'impulsion de durée intermédiaire IntRec à appliquer sur l'étage redresseur 1 (E1) :

• Le front de tension montant FM correspondant à l'impulsion la plus longue MaxRec à appliquer sur l'étage redresseur 1 est synchronisé avec le front de tension montant FM de l'impulsion de durée intermédiaire IntInv à appliquer sur l'étage onduleur 2 (E10),

• Le front de tension descendant FD de l'impulsion de durée intermédiaire IntInv à appliquer sur l'étage onduleur 2 est synchronisé avec le front descendant FD de l'impulsion de durée intermédiaire IntRec à appliquer sur l'étage redresseur 1 (E11),

• Le front de tension montant FM de l'impulsion de durée intermédiaire IntRec à appliquer sur l'étage redresseur est synchronisé avec le front de tension montant FM de l'impulsion de durée la plus courte MinInv à appliquer sur l'étage onduleur 2 (E12),

• Le front de tension descendant FD de l'impulsion de durée la plus courte MinInv à appliquer sur l'étage onduleur 2 est synchronisé avec le front de tension descendant FD de l'impulsion de durée la plus courte MinRec à appliquer sur l'étage redresseur (E13),

• Le front de tension montant FM de l'impulsion de durée la plus courte MinRec à appliquer sur l'étage redresseur 1 est synchronisé avec le front de tension montant FM de l'impulsion de durée la longue MaxInv à appliquer sur l'étage onduleur 2 (E14).

➢ Si l'impulsion de durée intermédiaire IntInv à appliquer sur l'étage onduleur est plus courte que l'impulsion de durée intermédiaire IntRec à appliquer sur l'étage redresseur 1 (E1):

• Le front de tension montant FM de l'impulsion de durée la plus longue MaxRec à appliquer sur l'étage redresseur est synchronisé avec le front de tension montant FM de l'impulsion de durée la plus courte MinInv à appliquer sur l'étage onduleur (E100),

• Le front de tension descendant FD de l'impulsion de durée la plus courte MinInv à appliquer sur l'étage onduleur est synchronisé avec le front de tension descendant FD de l'impulsion de durée la plus courte MinRec à appliquer sur l'étage redresseur (E101),

• Le front de tension montant FM de l'impulsion de durée la plus courte MinRec à appliquer sur l'étage redresseur 1 est synchronisé avec le front de tension montant FM de l'impulsion de durée intermédiaire IntInv à appliquer sur l'étage onduleur (E102),

• Le front de tension descendant FD de l'impulsion de durée intermédiaire IntInv à appliquer sur l'étage onduleur 2 est synchronisé avec le front de tension descendant FD de l'impulsion de durée intermédiaire IntRec à appliquer sur l'étage redresseur (E103),

• Le front de tension montant FM de l'impulsion de durée intermédiaire IntRec à appliquer sur l'étage redresseur 1 est synchronisé avec le front de tension montant FM de l'impulsion de durée la plus longue MaxInv à appliquer sur l'étage onduleur (E104).

❖ Si oui :

➢ Le front de tension descendant FD de l'impulsion la plus longue MaxRec à appliquer sur l'étage redresseur 1 est synchronisé avec le front descendant FD de l'impulsion la plus longue MaxInv à appliquer sur l'étage onduleur 2 (E00).

➢ Si l'impulsion de durée intermédiaire IntRec à appliquer sur l'étage redresseur 1 est plus longue que l'impulsion de durée intermédiaire IntInv à appliquer sur l'étage onduleur 2 (E2) :

• Le front de tension montant FM de l'impulsion de durée la plus longue MaxInv à appliquer sur le module onduleur 2 est synchronisé avec le front de tension montant FM de l'impulsion de durée intermédiaire IntRec à appliquer sur le module redresseur (E20),

• Le front de tension descendant FD de l'impulsion de durée intermédiaire IntRec à appliquer sur le module redresseur est synchronisé avec le front de tension descendant FD de l'impulsion de durée intermédiaire IntInv à appliquer sur le module onduleur 2 (E21),

• Le front de tension montant FM de l'impulsion de durée intermédiaire IntInv à appli-

quer sur le module onduleur 2 est synchronisé avec le front de tension montant FM de l'impulsion de durée la plus courte MinRec à appliquer sur le module redresseur (E22),

- Le front de tension descendant FD de l'impulsion de durée la plus courte MinRec à appliquer sur le module redresseur est synchronisé avec le front de tension descendant FD de l'impulsion de durée la plus courte MinInv à appliquer sur le module onduleur (E23),

- Le front de tension montant FM de l'impulsion de durée la plus courte MinInv à appliquer sur le module onduleur est synchronisé avec le front de tension montant FM de l'impulsion de durée la plus longue MaxRec à appliquer sur le module redresseur (E24).

➢ Si l'impulsion de durée intermédiaire IntRec à appliquer sur l'étage redresseur est plus courte que l'impulsion de durée intermédiaire IntInv à appliquer sur l'étage onduleur (E2) :

- Le front de tension montant FM de l'impulsion de durée la plus longue MaxInv à appliquer sur l'étage onduleur est synchronisé avec le front de tension montant FM de l'impulsion de durée la plus courte MinRec à appliquer sur le module redresseur (E200),

- Le front de tension descendant FD de l'impulsion de durée la plus courte MinRec à appliquer sur le module redresseur est synchronisé avec le front de tension descendant FD de l'impulsion de durée la plus courte MinInv à appliquer sur le module onduleur (E201),

- Le front de tension montant FM de l'impulsion de durée la plus courte MinInv à appliquer sur le module onduleur est synchronisé avec le front de tension montant FM de l'impulsion de durée intermédiaire IntRec à appliquer sur le module redresseur (E202),

- Le front de tension descendant FD de l'impulsion de durée intermédiaire IntRec à appliquer sur le module redresseur est synchronisé avec le front de tension descendant FD de l'impulsion de durée intermédiaire IntInv à appliquer sur le module onduleur (E203),

- Le front de tension montant FM de l'impulsion de durée intermédiaire IntInv à appliquer sur module onduleur 2 est synchronisé avec le front de tension montant FM de l'impulsion de durée la plus longue MaxRec à appliquer sur l'étage redresseur (E204).

Selon l'invention, la synchronisation totale telle que décrite ci-dessus en liaison avec les figures 3 et 4 entre l'étage redresseur 1 et l'étage onduleur 2 est réalisable pour chaque période de découpage et fonctionne systématiquement, les deux derniers fronts de tension montants étant automatiquement synchronisés. Ceci s'explique notamment par le fait que la somme des largeurs des impulsions appliquées à l'étage redresseur 1 est égale à la somme des largeurs des impulsions appliquées à l'étage onduleur 2 et par le fait que sur la partie redresseur, les largeurs d'impulsion s'ajoutent (parcours dirigé vers la droite sur la figure 3) alors que les largeurs d'impulsion sur la partie onduleur se retranchent (parcours dirigé vers la gauche sur la figure 3).

**Revendications**

1. Procédé de commande destiné à réduire le courant de mode commun dans un convertisseur de puissance qui comporte :

   - un étage redresseur (1, 1') connecté à plusieurs phases d'entrée (R, S, T) et un étage onduleur (2, 2') connecté à plusieurs phases de sortie (U, V, W),
   - un bus continu d'alimentation reliant l'étage redresseur (1, 1') à l'étage onduleur (2, 2') et comportant une première ligne d'alimentation et une deuxième ligne d'alimentation sur chacune desquelles est appliqué un potentiel électrique,
   - l'étage redresseur (1, 1') et l'étage onduleur (2, 2') comportant chacun au moins deux bras de commutation (10a, 10b, 10c, 20a, 20b, 20c) connectés à la première ligne d'alimentation et à la deuxième ligne d'alimentation,
   - des premiers moyens de commande (3) de l'étage redresseur (1, 1') pour connecter sélectivement pendant une durée de commutation chaque phase d'entrée (R, S, T) à la première ligne d'alimentation ou à la deuxième ligne d'alimentation,
   - des seconds moyens de commande (4) de l'étage onduleur (2, 2') pour connecter sélectivement pendant une durée de commutation une phase de sortie (U, V, W) à la première ligne d'alimentation ou à la deuxième ligne d'alimentation,
   - **caractérisé en ce que**, sur chaque période de découpage, l'étage redresseur (1, 1') et l'étage onduleur (2, 2') sont commandés de manière synchronisée de telle sorte qu'à chaque variation de potentiel appliquée sur une phase d'entrée (R, S, T) correspond toujours une variation de potentiel de même signe appliquée sur une phase de sortie (U, V, W).

2. Procédé selon la revendication 1, **caractérisé en ce**

**que**, sur une période de découpage, la génération d'un front de tension montant (FM) d'une impulsion réalisée par un premier bras de commutation de l'étage onduleur (2) coïncide avec la génération d'un front de tension montant (FM) d'une impulsion réalisée par un premier bras de commutation de l'étage redresseur et la génération du front de tension descendant (FD) pour l'impulsion réalisée par le premier bras de commutation de l'étage onduleur (2) coïncide avec la génération d'un front de tension descendant (FD) d'une impulsion réalisée par un deuxième bras de commutation de l'étage redresseur (1).

3. Procédé selon la revendication 1 ou 2, **caractérisé en ce que** l'étage redresseur (1, 1') et l'étage onduleur (2, 2') sont commandés de manière synchronisée par action sur la modulation de largeur d'impulsion appliquée à l'étage redresseur (1, 1') et à l'étage onduleur (2, 2').

4. Procédé selon l'une des revendications 1 à 3, **caractérisé en ce que** l'étage redresseur (1, 1') et l'étage onduleur (2, 2') sont commandés de manière synchronisée en suivant des règles de détermination, chaque règle de détermination tenant compte de la durée de commutation de chaque bras de commutation de l'étage onduleur et de l'étage redresseur.

5. Système de commande destiné à réduire le courant de mode commun dans un convertisseur de puissance qui comporte :

   - un étage redresseur (1, 1') connecté à plusieurs phases d'entrée (R, S, T) et un étage onduleur (2, 2') connecté à plusieurs phases de sortie (U, V, W),
   - un bus continu d'alimentation reliant l'étage redresseur (1, 1') à l'étage onduleur (2, 2') et comportant une première ligne d'alimentation et une deuxième ligne d'alimentation sur chacune desquelles est appliqué un potentiel électrique,
   - l'étage redresseur (1, 1') et l'étage onduleur (2, 2') comportant chacun au moins deux bras de commutation (10a, 10b, 10c, 20a, 20b, 20c) connectés à la première ligne d'alimentation et à la deuxième ligne d'alimentation,
   - des premiers moyens de commande (3) de l'étage redresseur (1, 1') employant une modulation de largeur d'impulsion pour connecter sélectivement chaque phase d'entrée (R, S, T) à la première ligne d'alimentation ou à la deuxième ligne d'alimentation,
   - des seconds moyens de commande (4) de l'étage onduleur (2, 2') employant une modulation de largeur d'impulsion pour connecter sélectivement une phase de sortie (U, V, W) à la première ligne d'alimentation ou à la deuxième ligne d'alimentation,

   - **caractérisé en ce que** les premiers moyens de commande (3) de l'étage redresseur (1, 1') et les seconds moyens de commande (4) de l'étage onduleur (2, 2') sont synchronisés de telle sorte qu'à chaque variation de potentiel appliquée sur une phase d'entrée (R, S, T) corresponde toujours une variation de potentiel de même signe appliquée à une phase de sortie (U, V, W).

6. Système selon la revendication 5, **caractérisé en ce que**, sur une période de découpage, les premiers moyens de commande et les seconds moyens de commande sont agencés pour que la génération d'un front de tension montant (FM) d'une impulsion réalisée par un premier bras de commutation de l'étage onduleur (2) coïncide avec la génération d'un front de tension montant (FM) d'une impulsion réalisée par un premier bras de commutation de l'étage redresseur et la génération du front de tension descendant (FD) pour l'impulsion réalisée par le premier bras de commutation de l'étage onduleur (2) coïncide avec la génération d'un front de tension descendant (FD) d'une impulsion réalisée par un deuxième bras de commutation de l'étage redresseur (1).

7. Système selon l'une des revendications 5 ou 6, **caractérisé en ce que** l'étage redresseur (1, 1') et l'étage onduleur (2, 2') comportent chacun trois bras de commutation (10a, 10b, 10c, 20a, 20b, 20c) à deux transistors de puissance (100) sur chaque bras de commutation.

8. Système selon l'une des revendications 5 à 7, **caractérisé en ce que** l'étage redresseur (1, 1') et l'étage onduleur (2, 2') sont configurés de manière à pouvoir générer un même nombre de niveaux de potentiel électrique.

9. Système selon l'une des revendications 5 à 8, **caractérisé en ce que** l'étage onduleur (2, 2') est de type NPC.

**Patentansprüche**

1. Steuerverfahren, das dazu bestimmt ist, den Gleichtaktstrom in einem Leistungswandler zu reduzieren, umfassend:

   - eine Gleichrichterstufe (1, 1'), die an mehrere Eingangsphasen (R, S, T) angeschlossen ist, und eine Wechselrichterstufe (2, 2'), die an mehrere Ausgangsphasen (U, V, W) angeschlossen ist,
   - einen Gleichstromversorgungsbus, der die Gleichrichterstufe (1, 1') mit der Wechselrichterstufe (2, 2') verbindet und eine erste Versorgungsleitung und eine zweite Versorgungsleitung umfasst, an die jeweils ein elektrisches Potential angelegt wird

- wobei die Gleichrichterstufe (1, 1') und die Wechselrichterstufe (2, 2') jeweils mindestens zwei Schaltarme (10a, 10b, 10c, 20a, 20b, 20c) umfassen, die an die erste Versorgungsleitung und an die zweite Versorgungsleitung angeschlossen sind,

- erste Steuermittel (3) der Gleichrichterstufe (1, 1'), um selektiv während einer Umschaltdauer jede Eingangsphase (R, S, T) mit der ersten Versorgungsleitung oder der zweiten Versorgungsleitung zu verbinden,

- zweite Steuermittel (4) der Wechselrichterstufe (2, 2'), um selektiv während einer Umschaltdauer eine Ausgangsphase (U, V, W) mit der ersten Versorgungsleitung oder der zweiten Versorgungsleitung zu verbinden,

- **dadurch gekennzeichnet, dass** in jeder Umschaltperiode die Gleichrichterstufe (1, 1') und die Wechselrichterstufe (2, 2') synchronisiert gesteuert werden, so dass jeder Potentialänderung, die an eine Eingangsphase (R, S, T) angelegt wird, immer eine Potentialänderung mit desselben Vorzeichen entspricht, die an eine Ausgangsphase (U, V, W) angelegt wird.

2. Verfahren nach Anspruch 1, **dadurch gekennzeichnet, dass** über eine Schnittperiode die Erzeugung einer aufsteigenden Spannungsfront (FM) eines Impulses, die von einem ersten Schaltarm der Wechselrichterstufe (2) durchgeführt wird, mit der Erzeugung einer aufsteigenden Spannungsfront (FM) eines Impulses, die von einem ersten Schaltarm der Gleichrichterstufe durchgeführt wird, zusammenfällt, und die Erzeugung der absteigenden Spannungsfront (FD) für den Impuls, die von dem ersten Schaltarm der Wechselrichterstufe (2) durchgeführt wird, mit der Erzeugung einer absteigenden Spannungsfront (FD) eines Impulses, die von einem zweiten Schaltarm der Gleichrichterstufe (1) durchgeführt wird, zusammenfällt.

3. Verfahren nach Anspruch 1 oder 2, **dadurch gekennzeichnet, dass** die Gleichrichterstufe (1, 1') und die Wechselrichterstufe (2, 2') synchronisiert durch Einwirken auf die Modulation der Impulsbreite, die an die Gleichrichterstufe (1, 1') und die Wechselrichterstufe (2, 2') angelegt wird, gesteuert werden.

4. Verfahren nach einem der Ansprüche 1 bis 3, **dadurch gekennzeichnet, dass** die Gleichrichterstufe (1, 1') und die Wechselrichterstufe (2, 2') synchronisiert unter Befolgung von Bestimmungsregeln gesteuert werden, wobei jede Bestimmungsregel die Umschaltdauer jedes Schaltarms der Gleichrichterstufe und der Wechselrichterstufe berücksichtigt.

5. Steuersystem, das dazu bestimmt ist, den Gleichtaktstrom in einem Leistungswandler zu reduzieren, umfassend:

- eine Gleichrichterstufe (1, 1'), die an mehrere Eingangsphasen (R, S, T) angeschlossen ist, und eine Wechselrichterstufe (2, 2'), die an mehrere Ausgangsphasen (U, V, W) angeschlossen ist,

- einen Gleichstromversorgungsbus, der die Gleichrichterstufe (1, 1') mit der Wechselrichterstufe (2, 2') verbindet und eine erste Versorgungsleitung und eine zweite Versorgungsleitung umfasst, an die jeweils ein elektrisches Potential angelegt wird

- wobei die Gleichrichterstufe (1, 1') und die Wechselrichterstufe (2, 2') jeweils mindestens zwei Schaltarme (10a, 10b, 10c, 20a, 20b, 20c) umfassen, die an die erste Versorgungsleitung und an die zweite Versorgungsleitung angeschlossen sind,

- erste Steuermittel (3) der Gleichrichterstufe (1, 1'), die eine Impulsbreitenmodulation einsetzen, um selektiv jede Eingangsphase (R, S, T) mit der ersten Versorgungsleitung oder der zweiten Versorgungsleitung zu verbinden,

- zweite Steuermittel (4) der Wechselrichterstufe (2, 2'), die eine Impulsbreitenmodulation einsetzen, um selektiv eine Ausgangsphase (U, V, W) mit der ersten Versorgungsleitung oder der zweiten Versorgungsleitung zu verbinden,

- **dadurch gekennzeichnet, dass** die ersten Steuermittel (3) der Gleichrichterstufe (1, 1') und die zweiten Steuermittel (4) der Wechselrichterstufe (2, 2') synchronisiert sind, so dass jeder Potentialänderung, die an eine Eingangsphase (R, S, T) angelegt wird, immer eine Potentialänderung mit desselben Vorzeichen entspricht, die an eine Ausgangsphase (U, V, W) angelegt wird.

6. System nach Anspruch 5, **dadurch gekennzeichnet, dass** über eine Schnittperiode die ersten Steuermittel und die zweiten Steuermittel dazu vorgesehen sind, dass die Erzeugung einer aufsteigenden Spannungsfront (FM) eines Impulses, die von einem ersten Schaltarm der Wechselrichterstufe (2) durchgeführt wird, mit der Erzeugung einer aufsteigenden Spannungsfront (FM) eines Impulses, die von einem ersten Schaltarm der Gleichrichterstufe durchgeführt wird, zusammenfällt, und die Erzeugung der absteigenden Spannungsfront (FD) für den Impuls, die von dem ersten Schaltarm der Wechselrichterstufe (2) durchgeführt wird, mit der Erzeugung einer absteigenden Spannungsfront (FD) eines Impulses, die von einem zweiten Schaltarm der Gleichrichterstufe (1) durchgeführt wird, zusammenfällt.

**7.** System nach einem der Ansprüche 5 oder 6, **dadurch gekennzeichnet, dass** die Gleichrichterstufe (1, 1') und die Wechselrichterstufe (2, 2') jeweils drei Schaltarme (10a, 10b, 10c, 20a, 20b, 20c) mit zwei Leistungstransistoren (100) auf jedem Schaltarm umfassen.

**8.** System nach einem der Ansprüche 5 bis 7, **dadurch gekennzeichnet, dass** die Gleichrichterstufe (1, 1') und die Wechselrichterstufe (2, 2') eingerichtet sind, um eine selbe Anzahl von elektrischen Potentialniveaus erzeugen zu können.

**9.** System nach einem der Ansprüche 5 bis 8, **dadurch gekennzeichnet, dass** die Wechselrichterstufe (2, 2') vom Typ NPC ist.

**Claims**

**1.** Control method for reducing the common-mode current in a power converter which comprises:

- a rectifier stage (1, 1') connected to a number of input phases (R, S, T) and an inverter stage (2, 2') connected to a number of output phases (U, V, W),
- a DC power supply bus linking the rectifier stage (1, 1') to the inverter stage (2, 2') and comprising a first power supply line and a second power supply line to each of which is applied an electrical potential,
- the rectifier stage (1, 1') and the inverter stage (2, 2') each comprising at least two switching arms (10a, 10b, 10c, 20a, 20b, 20c) connected to the first power supply line and to the second power supply line,
- first control means (3) of the rectifier stage (1, 1') for selectively connecting, during a switchover time, each input phase (R, S, T) to the first power supply line or to the second power supply line,
- second control means (4) of the inverter stage (2, 2') for selectively connecting, during a switchover time, an output phase (U, V, W) to the first power supply line or to the second power supply line,
- **characterized in that**, on each switching period, the rectifier stage (1, 1') and the inverter stage (2, 2') are controlled in a synchronized manner so that a variation of potential applied to an input phase (R, S, T) always corresponds to a variation of potential of the same sign applied to an output phase (U, V, W).

**2.** Method according to Claim 1, **characterized in that**, on a switching period, the generation of a rising voltage edge (FM) of a pulse produced by a first switching arm of the inverter stage (2) coincides with the generation of a rising voltage edge (FM) of a pulse produced by a first switching arm of the rectifier stage and the generation of the falling voltage edge (FD) for the pulse produced by the first switching arm of the inverter stage (2) coincides with the generation of a falling voltage edge (FD) of a pulse produced by a second switching arm of the rectifier stage (1).

**3.** Method according to Claim 1 or 2, **characterized in that** the rectifier stage (1, 1') and the inverter stage (2, 2') are controlled in a synchronized manner by action on the pulse width modulation applied to the rectifier stage (1, 1') and to the inverter stage (2, 2').

**4.** Method according to one of Claims 1 to 3, **characterized in that** the rectifier stage (1, 1') and the inverter stage (2, 2') are controlled in a synchronized manner by following determination rules, each determination rule taking account of the switchover time of each commutating arm of the inverter stage and of the rectifier stage.

**5.** Control system for reducing the common-mode current in a power converter which comprises:

- a rectifier stage (1, 1') connected to a number of input phases (R, S, T) and an inverter stage (2, 2') connected to a number of output phases (U, V, W),
- a DC power supply bus linking the rectifier stage (1, 1') to the inverter stage (2, 2') and comprising a first power supply line and a second power supply line to each of which is applied an electrical potential,
- the rectifier stage (1, 1') and the inverter stage (2, 2') each comprising at least two switching arms (10a, 10b, 10c, 20a, 20b, 20c) connected to the first power supply line and to the second power supply line,
- first control means (3) of the rectifier stage (1, 1') employing a pulse width modulation to selectively connect each input phase (R, S, T) to the first power supply line or to the second power supply line,
- second control means (4) of the inverter stage (2, 2') employing a pulse width modulation to selectively connect an output phase (U, V, W) to the first power supply line or to the second power supply line,
- **characterized in that** the first control means (3) of the rectifier stage (1, 1') and the second control means (4) of the inverter stage (2, 2') are synchronized so that a variation of potential applied to an input phase (R, S, T) always corresponds to a variation of potential of the same sign applied to an output phase (U, V, W).

6. System according to Claim 5, **characterized in that**, on a switching period, the first control means and the second control means are arranged so that the generation of a rising voltage edge (FM) of a pulse produced by a first switching arm of the inverter stage (2) coincides with the generation of a rising voltage edge (FM) of a pulse produced by a first switching arm of the rectifier stage and the generation of the falling voltage edge (FD) for the pulse produced by the first switching arm of the inverter stage (2) coincides with the generation of a falling voltage edge (FD) of a pulse produced by a second switching arm of the rectifier stage (1).

7. System according to one of Claims 5 or 6, **characterized in that** the rectifier stage (1, 1') and the inverter stage (2, 2') each comprise three switching arms (10a, 10b, 10c, 20a, 20b, 20c) with two power transistors (100) on each switching arm.

8. System according to one of Claims 5 to 7, **characterized in that** the rectifier stage (1, 1') and the inverter stage (2, 2') are configured so as to be able to generate the same number of electrical potential levels.

9. System according to one of Claims 5 to 8, **characterized in that** the inverter stage (2, 2') is of NPC type.

Fig. 1

*Fig. 2*

Fig. 3

Fig. 4

**EP 2 442 436 B1**

## RÉFÉRENCES CITÉES DANS LA DESCRIPTION

**Documents brevets cités dans la description**

- JP 2003018853 B

- US 6185115 B